**Europäisches Patentamt**

**European Patent Office**

**Office européen des brevets**

(11) Numéro de publication: **0 485 675 A1**

# DEMANDE DE BREVET EUROPEEN

(21) Numéro de dépôt: **90402970.9**

(22) Date de dépôt: **22.10.90**

(51) Int. Cl.5: **A23G 1/20, A23P 1/14**

(30) Priorité: **24.10.89 JP 276434/89**

(43) Date de publication de la demande:
**20.05.92 Bulletin 92/21**

(84) Etats contractants désignés:
**BE DE DK ES FR GB IT NL**

(71) Demandeur: **Blaizat, Claude**
**20, rue des Bluets**
**F- 75011 Paris(FR)**
Demandeur: **ULVAC JAPON Ltd.**
**2500 Hagisono Chigasaki**
**Kanagawa 253(JP)**

(72) Inventeur: **Nagasawa, Takayuki**
**486-16 Idenawa**
**Hiratsuka, Kanagawa-ken 254(JP)**
Inventeur: **Oninata, Yoichi**
**4-23 Kuryouzutsumi**
**Hiratsuka, Kanagawa-ken 254(JP)**

(54) **Installation, travaillant par fournée, pour expanser et refroidir sous vide des produits alimentaires.**

(57) L'installation comprend une cuve 1 munie d'une porte d'entrée 2 et d'une porte de sortie 3 et de moyens permettant d'isoler l'air ambiant régnant en amont de la porte d'entrée 2 de l'air ambiant régnant en aval de la porte de sortie 3. L'invention permet d'obtenir des produits alimentaires moussés qui ne coulent pas.

FIGURE 1

EP 0 485 675 A1

## INSTALLATION DE MOUSSAGE / RÉFRIGÉRATION À VIDE PAR FOURNÉE UTILISÉE DANS LE DOMAINE AGRO-ALIMENTAIRE

La présente invention concerne une installation de moussage / réfrigération à vide par fournée utilisée dans le domaine agro-alimentaire.

Dans les installations de moussage / réfrigération par fournée, la cuve de moussage / réfrigération n'est dotée que d'une seule porte servant d'entrée-sortie un chariot dans lequel on a entreposé le produit à faire mousser (par exemple du chocolat fondu). Puis en préservant l'état "fondu" du produit, on le fait mousser en faisant le vide grâce à la vanne de vidange. Ensuite en ouvrant la vanne de refroidissement on fait passer un produit de refroidissement pour faire durcir le produit tout en lui conservant son état de mousse. Ensuite, en ouvrant une vanne on fait revenir la pression atmosphérique à l'intérieur de la cuve. Le traitement du produit est terminé, on le sort par la porte qui avait précédemment servi de porte d'entrée.

Pour que le produit ne durcisse pas entre le moment où on le sort de l'installation servant à mouler le produit fondu, et le moment ou on l'introduit dans la cuve de moussage:réfrigération , il faut faire monter la température ambiante à un degré élevé.

Cependant, lorsqu'on sort le produit qu'on à fait mousser et refroidir à l'intérieur de la cuve par la même porte, pour ramener dans la même température ambiante que celle qui prévalait avant son introduction dans la cuve, comme la température ambiante est élevée, le produit peut fondre à nouveau ou couler par les brèches de son emballage.

La présente invention a pour objectif de résoudre les problèmes que nous venons de citer Elle propose une installation de moussage/réfrigération à vide par fournée afin que le produit ne fonde pas à nouveau et ne coule pas par des brèches de son emballage après qu'on l'ai fait mousser et refroidir.

Les objectifs que nous venons de citer peuvent être atteints grâce à l'installation de moussage/réfrigération à vide par fournée dont la caractéristique est d'isoler l'air ambiant en amont de la porte d'entrée de l'air ambiant en aval de la porte de sortie.

Avec une installation de moussage/réfrigération à vide par fournée, équipée comme nous allons la décrire, on peut régler la température ambiante de la pièce à partir de laquelle on introduit le produit à une température suffisamment élevée pour qu'il ne durcisse pas et régler la température ambiante de la pièce à partir de laquelle on sort le produit à une température suffisamment basse pour que le produit ne coule pas.

L'invention sera plus facilement comprise grâce à l'exemple d'application non limitatif ci-après décrit en référence aux dessins dans lesquels:
- la figure 1 représente une coupe latérale schématique d'une installation de moussage/réfrigération selon l'invention;
- La figure 2 représente une coupe longitudinale selon II-II de l'installation selon la figure 1.

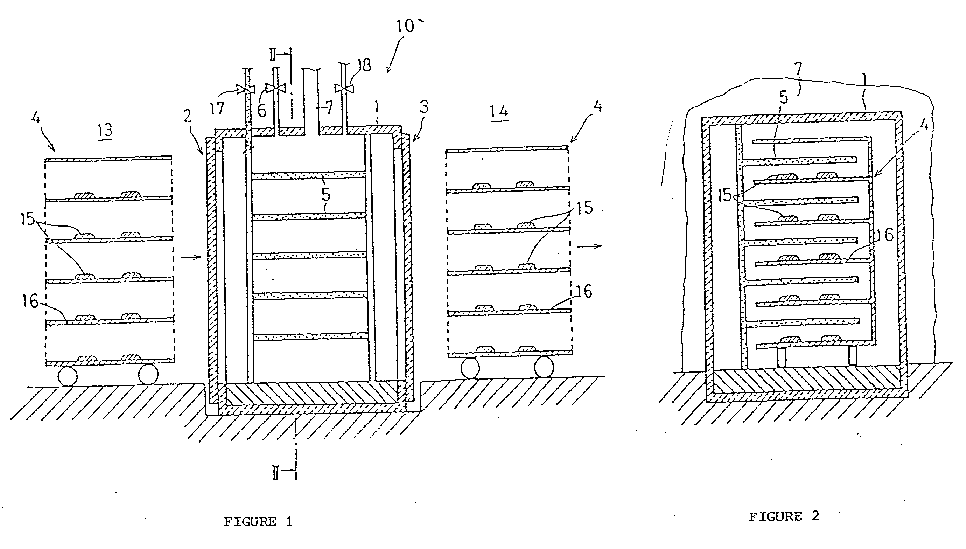

La figure 1 représente schématiquement une coupe latérale d'un exemple d'application de la présente invention . Nous indiquons en 10 la totalité de l'installation de moussage/réfrigération à vide par fournée. La cuve de moussage/réfrigération 1 est munie d'une porte d'entrée étanche 2 dirigée vers la pièce, à partir de laquelle on introduit le produit 13, et à l'opposé d'une porte de sortie 3 étanche dirigée vers la pièce 14 vers où sortent les produits.

La cuve de moussage/réfrigération 1 est insérée dans un mur 7 qui l'encercle de manière à ce que la partie de la cuve se trouvant dans la pièce 13 à partir de laquelle on introduit le produit soit à peu près égale à la partie de la cuve se trouvant dans la pièce 14 vers où le produit sort; le mur servant à isoler la pièce en amont 13 de la pièce en aval 14.

A l'intérieur de la cuve de moussage/réfrigération, sont disposées plusieurs étagères traversées par un liquide de refroidissement qu'on fait circuler en ouvrant la vanne de refroidissement 17.

La position des étagères 16, des chariots 4 sur lesquelles on place le chocolat 15 est en relation avec la position des étagères de la cuve 5. Lorsqu'on fait le vide à l'intérieur de la cuve 1 grâce à la vanne de vidange 6, tout l'air contenu dans la cuve s'échappe sans rencontrer de barrière.

La figure 2 représente la cuve avec un chariot à l'intérieur, c'est la coupe longitudinale correspondant à la ligne II-II de la figure 1.

En provenance d'une installation (non représentée sur les figures) où il a été emballé, à l'état fondu, le chocolat 15 est disposé sur les étagères 16 du chariot 4 que l'on introduit dans la cuve 1 dont la porte d'entrée est coulissante 2. Pendant cette opération, la vanne de refroidissement est fermée. La température de la pièce 13 à partir de laquelle on introduit le chocolat 15 est réglée à un niveau assez élevé pour que le chocolat ne durcisse pas. L'air de cette pièce 13 s'engouffrant dans la cuve de moussage/réfrigération 1 lorsqu'on y introduit un chariot 4, la température à l'intérieur de la cuve 1 est alors suffisamment élevée pour que le chocolat 15 reste fondu.

On ferme la porte d'entrée 2, on ouvre la vanne de vidange 6 pour faire le vide et faire mousser le chocolat. On ouvre la vanne de refroidissement 17, le chocolat 15 qui est à l'état de mousse est alors durci par le froid. On ferme ensuite la vanne de vidange 6 et la vanne de refroidissement 17 et on ouvre la vanne 18 et on ouvre la porte coulissante de sortie 3 et l'on sort le chariot 4 vers la pièce 14 en aval.

La pièce 14 ou est sorti le chariot a une température ambiante suffisamment basse et son humidité est réglée de manière à ce que l'on obtienne un produit de bonne qualité qui ne fonde pas à nouveau et ne coule pas par les brèches de son emballage.

Dans l'exemple d'application présenté, la porte d'entrée et la porte de sortie sont symétriquement opposées. Il suffit en fait que la pièce en amont et la pièce en aval puissent être séparées de façon étanche.

D'autre part, les deux pièces doivent être séparées l'une de l'autre mais pas obligatoirement par un mur; il suffit qu'une séparation comme par exemple une cloison, les isole thermiquement l'une de l'autre de manière efficace.

Par ailleurs, dans l'exemple présenté, la cuve est munie d'étagère de refroidissement elle peut être une cuve simple, sans étagère, et refroidir par ses seules parois internes.

Enfin dans l'exemple d'application présenté, la cuve de moussage/réfrigération n'était pas munie de dispositif de chauffage; si pour faire mousser le produit il est nécessaire de le chauffer, on pourrait doter la cuve d'un dispositif de chauffage.

Avec l'application de la présente invention on peut obtenir une production de bonne qualité et des produits qui ne fondent pas et ne coulent pas par les brêches quand on les sort d'une cuve de moussage 1 réfrigération après un traitement pour les faire mousser et refroidir.

**Revendications**

1/ Installation de moussage/réfrigération à vide par fournée utilisée dans le domaine agro-alimentaire comprenant une cuve 1 de moussage/réfrigération munie d'une vanne 6 permettant de faire le vide et d'une vanne 17 de refroidissement caractérisée en ce que ladite cuve 1 possède une porte d'entrée étanche 2 et une porte de sortie 3 étanche et en ce qu'elle possède des moyens pour isoler l'air ambiant régnant en amont de ladite porte d'entrée 2 de l'air ambiant régnant en aval de ladite porte de sortie 3.

2/ Installation de moussage/réfrigération à vide par fournée selon la revendication 1 caractérisée en ce que lesdits moyens sont constitués par un mur ou une cloison dans lequel est inséré la cuve, ce moyen assurant l'isolement thermique entre l'amont et l'aval ou l'entrée et sortie de l'installation 1.

3/ Installation de moussage/réfrigération à vide par fournée selon l'une des revendication 1 ou 2 caractérisée en ce que la cuve 1 est munie d'étagères 16.

4/ Installation de moussage/réfrigération à vide par fournée selon l'une des revendications 1 à 3 caractérisée en ce que la cuve 1 est munie de moyens de chauffage.

FIGURE 1

FIGURE 2

EP 0 485 675 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 034 433 (K.J. GILIARD)<br>* Figures 1,2,3,4; revendication 1;<br>page 5, alinéa 3; page 4, alinéas 6,7 *<br>--- | 1,2,3 | A 23 G 1/20<br>A 23 P 1/14 |
| Y | FR-A- 831 591 (F. PALIK)<br>* Figures 1,3; page 3, lignes 19-49 *<br>--- | 1,2,3 | |
| A | US-A-2 402 999 (W.A. HEYMAN)<br>* Figure 1; colonne 3, lignes 6-65;<br>colonne 4, lignes 24-38 *<br>--- | 1,3,4 | |
| A | US-A-1 855 670 (G.W. GREENWOOD)<br>--- | | |
| A | FR-A-1 576 206 (NOEL et al.)<br>--- | | |
| A | FR-A-1 496 681 (NESTLE)<br>--- | | |
| A | BE-A- 770 351 (NOEL et al.)<br>--- | | |
| A | CH-A- 528 873 (TAKASAGO PERFUMERY et al.)<br>----- | | **DOMAINES TECHNIQUES RECHERCHES (Int. Cl.5)**<br><br>A 23 G<br>A 23 P |

Le présent rapport a été établi pour toutes les revendications

| Lieu de la recherche | Date d'achèvement de la recherche | Examinateur |
|---|---|---|
| LA HAYE | 05-12-1990 | GUYON R.H. |